(19) Europäisches Patentamt
European Patent Office
Office européen des brevets

(11) **EP 3 278 316 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **16711605.2**

(22) Anmeldetag: **22.03.2016**

(51) Int Cl.:
*G08G 1/16* (2006.01)     *G06K 9/00* (2006.01)
*G06K 9/62* (2006.01)

(86) Internationale Anmeldenummer:
**PCT/EP2016/056195**

(87) Internationale Veröffentlichungsnummer:
**WO 2016/156097 (06.10.2016 Gazette 2016/40)**

(54) **VERFAHREN ZUM BEURTEILEN EINER ZUGEHÖRIGKEIT EINES ERFASSUNGSPUNKTS ZU EINEM OBJEKT IN EINEM UMGEBUNGSBEREICH EINES KRAFTFAHRZEUGS SOWIE FAHRERASSISTENZSYSTEM**

METHOD FOR ASSESSING AN ASSOCIATION OF A DETECTION POINT WITH AN OBJECT IN AN AREA SURROUNDING A MOTOR VEHICLE, AND DRIVER ASSISTANCE SYSTEM

PROCÉDÉ D'APPRÉCIATION D'UNE APPARTENANCE D'UN POINT DÉTECTÉ À UN OBJET DANS UNE ZONE ENVIRONNANTE D'UN VÉHICULE AUTOMOBILE AINSI QUE SYSTÈME D'ASSISTANCE À LA CONDUITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2015 DE 102015104937**

(43) Veröffentlichungstag der Anmeldung:
**07.02.2018 Patentblatt 2018/06**

(73) Patentinhaber: **Valeo Schalter und Sensoren GmbH**
**74321 Bietigheim-Bissingen (DE)**

(72) Erfinder:
• **BARIANT, Jean-Francois**
**74321 Bietigheim-Bissingen (DE)**
• **HEIMBERGER, Markus**
**74321 Bietigheim-Bissingen (DE)**

(74) Vertreter: **Pothmann, Karsten et al**
**Valeo Schalter und Sensoren GmbH**
**CDA-IP**
**Laiernstraße 12**
**74321 Bietigheim-Bissingen (DE)**

(56) Entgegenhaltungen:
DE-A1-102006 049 626     DE-A1-102009 045 286
US-A1- 2004 081 359     US-A1- 2004 120 550
US-A1- 2004 208 341     US-A1- 2005 147 303
US-A1- 2005 185 826

**Beschreibung**

Die Erfindung betrifft ein Verfahren zum Beurteilen einer Zugehörigkeit eines Erfassungspunkts zu einem Objekt in einem Umgebungsbereich eines Kraftfahrzeugs, bei welchem der Erfassungspunkt mit einer ersten Sensoreinrichtung des Kraftfahrzeugs erfasst wird. Es wird eine eine Positionsunschärfe des Erfassungspunkts charakterisierende Unschärfezone um den Erfassungspunkt gebildet. Des Weiteren betrifft die Erfindung auch ein Fahrerassistenzsystem sowie ein Kraftfahrzeug.

Aus der DE 10 2006 049 626 A1 ist ein Verfahren zur Bestimmung der Position und der geometrischen Ausdehnung eines Objekts in einem Umfeld eines Kraftfahrzeugs bekannt. Die Zuordnung eines Messwerts zu einer Population eines Objekts wird dort über ein Gate-Verfahren oder über den Mahalanobis-Abstand durchgeführt.

Darüber hinaus ist aus der DE 10 2009 045 286 A1 ein Verfahren zur Abbildung eines Umfelds eines Kraftfahrzeugs bekannt. Es wird dort vorgesehen, dass detektierte Objekte jeweils mit zwei Koordinatenpunkten und einer zu dem jeweiligen Koordinatenpunkt zugeordneten Positionsunschärfe beschrieben werden. Diese Koordinatenpunkte und die Positionsunschärfe werden als Daten in einer Schnittstelle abgelegt, auf die vom Fahrerassistenzsystem des Fahrzeugs zugegriffen werden kann. Damit die Daten von Fahrerassistenzsystemen verwendet werden können, ist eine allgemeine Objektschnittstelle notwendig, mit der die Eigenschaften des Objekts beschrieben werden.

Darüber hinaus ist aus der US2004208341 ein System und Verfahren zum Verfolgen einer globalen Form eines in Bewegung befindlichen Objekts bekannt. Ein oder mehrere Kontrollpunkte entlang einer Anfangskontur der globalen Form sind definiert. Jeder der ein oder mehreren Kontrollpunkte wird verfolgt, während sich das Objekt in Bewegung befindet. Die Unsicherheit eines Ortes eines Kontrollpunkts in Bewegung wird unter Verwendung einer Anzahl von Techniken dargestellt. Die Unsicherheit zum Beschränken der globalen Form wird unter Verwendung eines früheren Formmodells ausgenutzt. In einer alternativen Ausführungsform werden mehrere Erscheinungsmodelle für jeden Kontrollpunkt erstellt und die von jedem Modell erzeugten Bewegungsvektoren werden kombiniert, um die Form des Objekts zu verfolgen. Die Bewegung der Form des Objekts kann visuell unter Verwendung einer Anzeige und Farbvektoren verfolgt werden.

Bei den bekannten Verfahren ist die Beurteilung einer Zugehörigkeit eines Erfassungspunkts nur eingeschränkt möglich, so dass eine entsprechende Ungenauigkeit einhergeht. Dies ist insbesondere dann auch nachteilig für die konkrete Objektbewertung und somit auch folglich für weitere Aussagen, beispielsweise bezüglich einem Freiraum zwischen einem Objekt und dem Kraftfahrzeug und/oder bezüglich einer Eintragung eines derartigen Objekts in eine Umfeldkarte. Nicht zuletzt ist im Stand der Technik die Bereitstellung von Informationen an einer genannten Schnittstelle verbesserungswürdig, da einerseits nur pauschale und wenig spezifizierte, insbesondere im Hinblick auf eine Weiterverarbeitung oder Weiterleitung wenig angepasste Informationen vorhanden sind und andererseits der Auswerteaufwand für die Informationen, die an dieser Schnittstelle bereits bereitgestellt werden, relativ hoch ist.

Es ist Aufgabe der vorliegenden Erfindung, ein Verfahren sowie ein Fahrerassistenzsystem zu schaffen, mit welchem die Beurteilung einer Zugehörigkeit eines Erfassungspunkts zu einem Objekt in einem Umgebungsbereich eines Kraftfahrzeugs genauer erfolgen kann.

Diese Aufgabe wird durch ein Verfahren und ein Fahrerassistenzsystem gemäß den unabhängigen Ansprüchen 1 und 14 gelöst.

Bei einem Verfahren gemäß dem unabhängigen Anspruch 1 zum Beurteilen einer Zugehörigkeit eines Erfassungspunkts zu einem Objekt in einem Umgebungsbereich eines Kraftfahrzeugs wird der Erfassungspunkt mit einer ersten Sensoreinrichtung des Kraftfahrzeugs erfasst. Es wird eine eine Positionsunschärfe des Erfassungspunkts charakterisierende Unschärfezone um den Erfassungspunkt gebildet. Ein wesentlicher Gedanke der Erfindung ist darin zu sehen, dass für die Beurteilung der Zugehörigkeit des Erfassungspunkts zu dem Objekt zumindest eine Position eines weiteren Erfassungspunkts des Objekts berücksichtigt wird. Abhängig von der Unschärfezone des Erfassungspunkts wird eine Gesamt-Unschärfezone gebildet. Die Zugehörigkeit des zu bewertenden Erfassungspunkts zu dem Objekt wird dann zuerkannt, wenn sowohl der Erfassungspunkt als auch der weitere Erfassungspunkt in einem durch die Gesamt-Unschärfezone gebildeten Bereich liegen. Durch dieses erfindungsgemäße Verfahren wird nicht mehr nur der zu beurteilende Erfassungspunkt allein herangezogen, um ihn einem Objekt zuzuordnen. Vielmehr wird hier ein Bezug zu einem anderen Erfassungspunkt hergestellt und darüber hinaus auch dann die Verbindung und damit die eigene Unschärfezone des zu bewertenden Erfassungspunkts beurteilt. Durch diese Verknüpfung des Erfassungspunkts mit weiteren Informationen lässt sich die Gesamt-Unschärfezone bilden, die dann eine durch ihre komplexere Abhängigkeit von den anderen Informationen genauere Aussage zulässt, ob der zu beurteilende Erfassungspunkt tatsächlich einem Objekt beziehungsweise dem Objekt zugeordnet werden kann.

Eine derartige Vorgehensweise hat dadurch wesentliche Vorteile bezüglich der Bewertungsgenauigkeit. Folglich lassen sich in dem Zusammenhang dann auch genauere Aussage über das detektierte Objekt, beispielsweise im Hinblick auf dessen örtliche Position und/oder dessen Ausdehnung vollziehen. Dies führt folglich wiederum dazu, dass genauere Informationen über eine Objektposition in dem Umgebungsbereich des Fahrzeugs zur Verfügung stehen, so dass ein Fahrerassistenzsystem bedarfsgerechter arbeitet.

Vorzugsweise ist vorgesehen, dass die Unschärfezone des zu beurteilenden Erfassungspunkts als eine im zweidimensionalen elliptische Unschärfezone erzeugt wird. Durch eine derartige formspezifische Unschärfezone kann auch eine gewisse Gewichtung der Richtungswahrscheinlichkeit, in welche eine Positionsunschärfe größer oder kleiner ist, angegeben werden. Denn durch die jeweiligen Hauptachsen einer derartigen Ellipse und deren unterschiedliche Längen, werden folglich auch unterschiedliche Ausdehnungen der Unschärfezone in diese Richtungen vorgegeben. Dadurch wird auch eine bereits, insbesondere in Bezug auf ein Koordinatensystem der Sensoreinrichtung beziehungsweise auch des Kraftfahrzeugs orientierte Unschärfeellipse definiert.

Vorzugsweise ist vorgesehen, dass um den weiteren Erfassungspunkt eine weitere Unschärfezone gebildet wird. Insbesondere wird die Gesamt-Unschärfezone auch abhängig von der weiteren Unschärfezone, insbesondere durch summieren der Unschärfezonen, gebildet. Dies ist eine besonders vorteilhafte Ausführung, da somit auch der weitere Erfassungspunkt nicht als punktgleich und korrekt angesehen wird, sondern ebenfalls mit einer individuellen Positionsunschärfe beurteilt wird. Dadurch wird dann die Aussagewahrscheinlichkeit nochmals erhöht, da auch die Gesamt-Unschärfezone diesbezüglich die weiteren Unwägbarkeiten bezüglich der Position des weiteren Erfassungspunkts berücksichtigt.

Der weitere Erfassungspunkt kann vorzugsweise ein Referenzpunkt bzw. ein Referenzerfassungspunkt bezüglich einer Objektposition sein, insbesondere ein dem Objekt zugehöriger Erfassungspunkt sein.

In einer vorteilhaften Ausführung wird auch die weitere Unschärfezone als eine im zweidimensionalen elliptische Unschärfezone erzeugt. Die bereits zur oben genannten vorteilhaften Ausführung genannten Vorteile einer elliptischen Unschärfezone um den insbesondere zu beurteilenden Erfassungspunkt gelten auch hier.

Wird eine derartige Unschärfezone im dreidimensionalen Raum betrachtet, so ergibt sich eine zeppelinförmige Geometrie.

Bei einer vorteilhaften Ausführung wird die Unschärfezone und/oder eine um den weiteren Erfassungspunkt erzeugte weitere Unschärfezone in ihrer Form abhängig von der Lage der Erfassungspunkte zu der Gesamt-Unschärfezone angepasst. Damit wird die Genauigkeit der Positionsunschärfe erhöht, da durch die Größenänderung und/oder die Änderung der Orientierung zumindest einer Unschärfezone die Aussagepräzision bezüglich der Positionsunschärfe erhöht werden kann und somit auch die Aussage bezüglich der Zugehörigkeit eines zu beurteilenden Erfassungspunkts zu einem Objekt präzisiert wird.

Vorzugsweise wird das Anpassen zumindest einer Unschärfezone nach zumindest einer ersten Zugehörigkeitsaussage durchgeführt. Durch eine derartige gestufte beziehungsweise mehrstufige Zugehörigkeitsbeurteilung ist eine weitere Erhöhung der Aussagepräzision gerade im Hinblick auf die Beurteilung einer Zugehörigkeit eines Erfassungspunkts zu einem Objekt erhöht.

Gemäß dem unabhängigen Anspruch 1 wird zur Beurteilung der Zugehörigkeit des Erfassungspunkts zum Objekt eine Kovarianzmatrix abhängig von einem Abstand zwischen den Erfassungspunkten gebildet und ein Mahalanobis-Abstand abhängig von der Kovarianzmatrix erzeugt. Durch eine derartige Verfahrensspezifikation lässt sich ein relativ einfacher und robuster Bewertungszyklus installieren, der zu genauen Aussageergebnissen führt.

Gemäß dem unabhängigen Anspruch 1 wird überprüft, ob der Mahalanobis-Abstand kleiner einem vorgegebenen Gatewert, insbesondere einem Gatewert von 1, ist. Im Falle, dass der Mahalanobis-Abstand kleiner diesem vorgegebenen Gatewert ist, liegen die beiden Erfassungspunkte innerhalb der Gesamt-Unschärfezone und der Erfassungspunkt wird dem Objekt als zugehörig beurteilt. Indem dieser Gatewert insbesondere auf diese spezifische Zahl 1 vorgegeben wird, lässt sich in besonders einfacher und aufwandsarmer Weise die Berechnung der Positionsunschärfe der damit dann folgenden Beurteilung der Zugehörigkeit des Erfassungspunkts zum Objekt bewerten und dies kann dann auch noch mit hinreichend hoher Wahrscheinlichkeit als genau beziehungsweise korrekt angesehen werden.

Vorzugsweise überprüft wird, ob der Mahalanobis-Abstand kleiner einem vorgegebenen Gatewert, insbesondere einem Gatewert von 1, ist, und im Falle, dass der Mahalanobis-Abstand kleiner dem vorgegebenen Gatewert ist, wird erkannt, das die Kovarianzmatrix zu groß gewählt wurde, wobei dann insbesondere die Kovarianzmatrix verkleinert wird.

Vorzugsweise werden der Erfassungspunkt und der weitere Erfassungspunkt zu einem fusionierten Erfassungspunkt assoziiert beziehungsweise zusammengefasst, wenn die beiden Erfassungspunkte in dem Bereich der Gesamt-Unschärfezone liegen. Dadurch wird quasi ein gemeinsamer repräsentierender Zentral-Erfassungspunkt beziehungsweise Schwerpunkt-Erfassungspunkt erzeugt.

Vorzugsweise wird zumindest eine Unschärfezone in der Form und/oder Orientierung angepasst, wenn der Mahalanobis-Abstand einer Zugehörigkeitsbeurteilung größer dem Gatewert, insbesondere dem Gatewert 1 ist. Bei dieser Ausgestaltung wird dann nämlich angenommen, dass die Ungenauigkeit bezüglich der erreichten Positionsunschärfe als auch dann die Wahrscheinlichkeitsaussage für die Zugehörigkeit des Erfassungspunkts zum Objekt noch zu niedrig ist und durch diese Detaillierung mit diesem zusätzlichen vorteilhaften Verfahrensschritt werden dann genau diese Aussagewahrscheinlichkeiten präzisiert beziehungsweise erhöht.

Vorzugsweise wird zumindest eine Unschärfezone angepasst, wenn bei einem Beurteilungsszenario eine Anzahl N von Zugehörigkeitsbeurteilungen von Erfassungspunkten zu einem Objekt größer einem Schwellwert ist, wobei die Anzahl N jeweils mit einem Mahalanobis-Abstand größer dem Gatewert beurteilt wurde. Ist somit in einem Szenario bei Zugehörigkeitsbeurteilungen eine unerwünscht hohe Anzahl und somit ein unerwünscht hoher Prozentanteil der Erfassungspunkte und somit auch der Zugehörigkeitsaussagen größer diesem Gatewert, so kann nicht mit ausreichend gewünschter hoher Wahrscheinlichkeit die Zugehörigkeit des Erfassungspunkts zum Objekt beurteilt werden. Um dies dann entsprechend zu verbessern beziehungsweise zu erhöhen, wird durch diesen vorteilhaften weiteren Schritt des erfindungsgemäßen Verfahrens genau dem entgegengewirkt und erreicht, dass dann eine ausreichend hohe Anzahl von Zugehörigkeitsbeurteilungen kleiner dem Schwellwert auftreten und somit dann auch mit ausreichend hoher Genauigkeit die Zugehörigkeit des Erfassungspunkts zum Objekt beurteilt werden kann.

Vorzugsweise wird der Umgebungsbereich mit einer zur ersten Sensoreinrichtung funktionell unterschiedlichen zweiten Sensoreinrichtung erfasst. Erfassungspunkte der zweiten Sensoreinrichtung werden auf Basis der zur ersten Sensoreinrichtung zugrundegelegten Zugehörigkeitsbeurteilung beurteilt. Dies ist eine besonders vorteilhafte Ausführung, da es somit möglich wird, dass Erfassungspunkte von zwei unterschiedlich arbeitenden Sensoreinrichtungen im Hinblick auf ihre Unschärfe und daraus folgend im Hinblick auf ihre Zugehörigkeit zu einem Objekt beurteilt, insbesondere gleich beurteilt werden können. Beide Sensoreinrichtungen können somit auf gleiche Art und Weise prüfen beziehungsweise testen und die Ergebnisse können auch verglichen werden. Dies erhöht gerade bei Fahrerassistenzsystemen, die multipel auf unterschiedliche Sensoreinrichtungsinformationen basierend arbeiten beziehungsweise auf diese zurückgreifen, die Aussage über das Vorhandensein eines Objekts und/oder über die Position eines Objekts im Umgebungsbereich und/oder die Ausdehnung eines Objekts wesentlich. Indem sich durch diese vorteilhafte Ausführung beide Sensoreinrichtungen insbesondere auch gegenüber einem gleichen Gatewert, insbesondere einem Gatewert 1 prüfen, können nunmehr auch unterschiedliche Sensoreinrichtungen mit einem und deren Detektionsergebnisse Beurteilungsszenario bewertet werden.

Vorzugsweise werden die Zugehörigkeitsbeurteilungen der beiden Sensoreinrichtungen verglichen und eine Aussagegenauigkeit zumindest einer Sensoreinrichtung wird abhängig davon bewertet.

Vorzugsweise wird das durch zugehörige Erfassungspunkte charakterisierte Objekt in einer Umgebungsbereichskarte des Kraftfahrzeugs eingetragen. In einer weiteren vorteilhaften Ausführung wird diese Umgebungsbereichskarte dann auf einer Anzeigeeinheit des Kraftfahrzeugs angezeigt.

Beispielsweise dann, wenn ein Fahrerassistenzsystem ein Parkassistenzsystem ist, kann dann diese Umgebungsbereichskarte für einen Fahrzeuginsassen sichtbar auf der Anzeigeeinheit angezeigt werden und erkannt werden, wo Objekte sich befinden.

Die Erfindung betrifft auch ein Fahrerassistenzsystem gemäß dem unabhängigen Anspruch 14 mit zumindest einer ersten Sensoreinrichtung und einer Auswerteeinheit. Das Fahrerassistenzsystem ist zum Ausführen eines erfindungsgemäßen Verfahrens oder einer vorteilhaften Ausgestaltung davon ausgebildet.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:

Fig. 1     eine schematische Draufsicht auf ein Ausführungsbeispiel eines erfindungsgemäßen Kraftfahrzeugs mit einem Ausführungsbeispiel eines erfindungsgemäßen Fahrerassistenzsystems;

Fig. 2     eine beispielhafte Darstellung von Erfassungspunkten zur Beurteilung zur Zugehörigkeit zu einem Objekt;

Fig. 3     eine beispielhafte Darstellung eines Positionsunschärfeszenarios; und

Fig. 4     eine weitere beispielhafte Darstellung eines weiteren Positionsunschärfeszenarios.

In den Figuren werden gleiche oder funktionsgleiche Elemente mit den gleichen Bezugszeichen versehen.

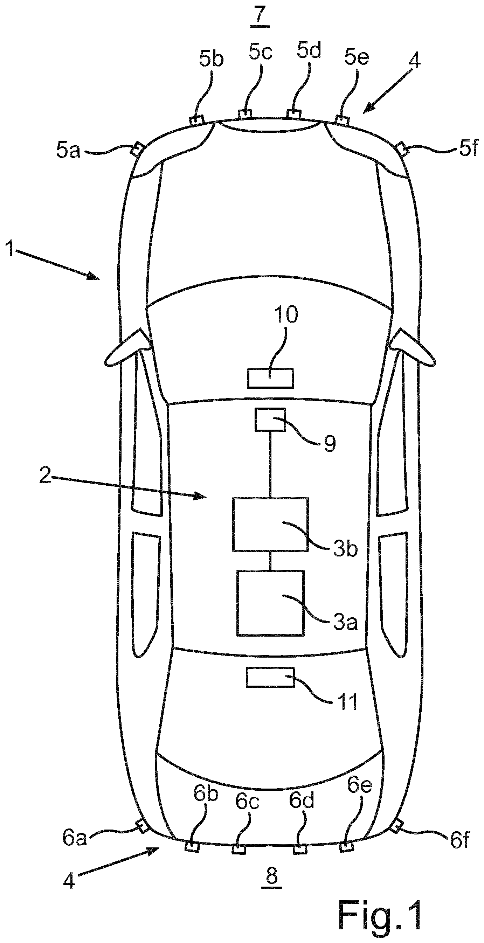

In Fig. 1 ist in einer schematischen Draufsichtdarstellung ein Kraftfahrzeug 1 gezeigt, welches ein Fahrerassistenzsystem 2 aufweist. Das Fahrerassistenzsystem 2 kann beispielsweise ein Parkassistenzsystem sein.

Das Fahrerassistenzsystem 2 umfasst eine Auswerteeinrichtung bzw. Verarbeitungseinrichtung 3 und eine Ultraschall-Detektionseinrichtung 4 als erste Sensoreinrichtung. Die Ultraschall-Detektionseinrichtung 4 umfasst im Ausführungsbeispiel am Kraftfahrzeug 1 frontseitig angeordnete Ultraschallsensoren. Hier sind im Ausführungsbeispiel sechs Ultraschallsensoren 5a, 5b, 5c, 5d, 5e und 5f vorhanden. Darüber hinaus sind im Ausführungsbeispiel auch in einem Heckbereich des Kraftfahrzeugs 1 weitere Ultraschallsensoren 6a, 6b, 6c, 6d, 6e und 6f verbaut. Mit den frontseitigen Ultraschallsensoren 5a bis 5f kann ein frontseitiger und seitlicher Umgebungsbereich 7 erfasst werden. Demgegenüber kann mit den heckseitigen Ultraschallsensoren 6a bis 6f ein heckseitiger und seitlicher Umgebungsbereich 8 des Kraftfahrzeugs 1 erfasst werden. In dem Zusammenhang sind die Ultraschallsensoren 5a bis 5f und 6a bis 6f vorzugsweise so angeordnet, dass der gesamte, um das Kraftfahrzeug 1 vorhandene Umgebungsbereich, der dann aus den Umgebungsbereichen 7 und 8 zusammengesetzt ist, erfasst wird.

Das Kraftfahrzeug 1 umfasst darüber hinaus eine Anzeigeeinheit 9, auf der bildhafte Darstellungen erfolgen können. Auf dieser Anzeigeeinheit 9 kann dann insbesondere eine Umgebungsbereichskarte beziehungsweise eine Umfeldkarte angezeigt werden. Dabei wird dann das Kraftfahrzeug 1 beispielsweise auch in dieser Draufsichtdarstellung gezeigt und der Umgebungsbereich dargestellt, sodass auch in dem Umgebungsbereich 7 und/oder 8 detektierte Objekte angezeigt und für einen Fahrzeuginsassen erkenntlich sind. Dies kann beispielsweise bei einem Einparkvorgang oder einem Ausparkvorgang vorteilhaft sein.

Mit dem Fahrerassistenzsystem 2 ist es ermöglicht, dass im Umgebungsbereich 7 und/oder Umgebungsbereich 8 vorhandene Objekte detektiert werden und auch auf Basis der von Ultraschallsensoren 5a bis 5f und/oder 6a bis 6f erhaltenen Informationen Aussagen über den Zustand von derartigen Objekten gegeben werden können.

Insbesondere ist vorgesehen, dass in der Verarbeitungseinrichtung 3, die insbesondere zur Erstellung einer Umgebungsbereichskarte ausgebildet ist, die Informationen zumindest einiger Ultraschallsensoren 5a bis 5f sowie 6a bis 6f verarbeitet werden.

Das Kraftfahrzeug 1 umfasst im Ausführungsbeispiel neben der Ultraschall-Detektionseinrichtung 4, die eine erste Sensoreinrichtung darstellt, zumindest eine zur ersten Sensoreinrichtung funktionell unterschiedlich arbeitende zweite Sensoreinrichtung, die im Ausführungsbeispiel durch eine Frontkamera 10 und/oder eine Heckkamera 11 gebildet ist. Die Frontkamera 10 und/oder die Heckkamera 11 detektieren ebenfalls in dem Umgebungsbereich 7 beziehungsweise in dem Umgebungsbereich 8, so dass auch damit Objekte erfasst werden können.

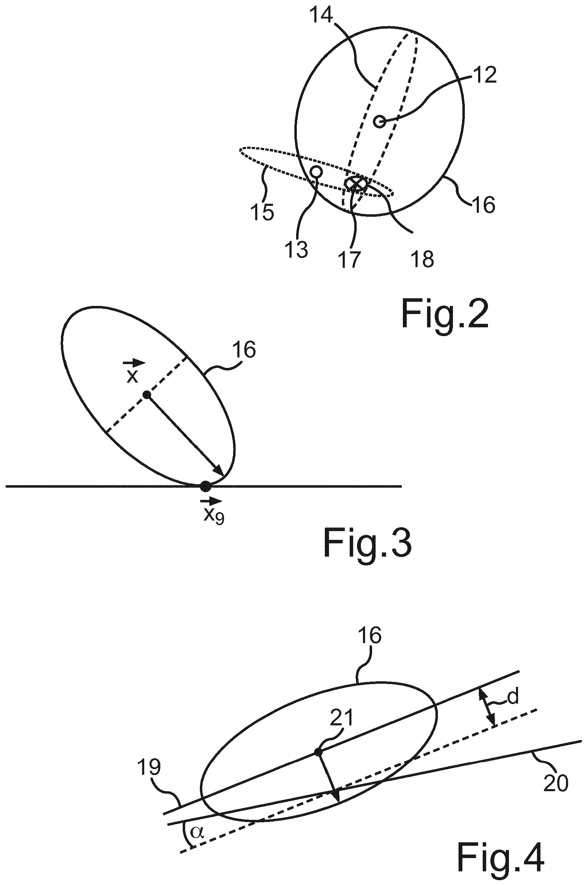

In Fig. 2 ist in einer schematischen Darstellung ein beispielhaftes Szenario gezeigt, bei welchem ein Erfassungspunkt 12 erfasst wurde. Darüber hinaus ist ein weiterer Erfassungspunkt 13 erfasst. Beispielsweise sind diese beiden Erfassungspunkte 12 und 13 im Umgebungsbereich 7 mit der Ultraschall-Detektionseinrichtung 4 erfasst worden. Zur Beurteilung insbesondere des Erfassungspunkts 12 zu dem Objekt, zu dem dann auch der Erfassungspunkt 13 zugehörig ist, wird durch eine Informationsverarbeitung in der Verarbeitungseinrichtung 3 um den Erfassungspunkt 12 eine im zweidimensionalen elliptische Unschärfezone 14 gebildet, die eine Positionsunschärfe des Erfassungspunkts 12 darstellt. Des Weiteren wird im Ausführungsbeispiel auch um den weiteren Erfassungspunkt 13 eine im zweidimensionalen elliptische Unschärfezone 15 gebildet, die die Positionsunschärfe des weiteren Erfassungspunkts 13 abbildet.

Im Ausführungsbeispiel wird dann abhängig von den Unschärfezonen 14 und 15 eine Gesamt-Unschärfezone 16 gebildet. Insbesondere wird diese Gesamt-Unschärfezone 16 aus einer Summe der Unschärfezonen 14 und 15 gebildet.

Diese Gesamt-Unschärfezone 16 wird dann um den Erfassungspunkt 12 gebildet. Liegen dann beide Erfassungspunkte 12 und 13 in einem Bereich, der durch die GesamtUnschärfezone 16 begrenzt ist, so wird der Erfassungspunkt 12 als dem Objekt zugehörig beurteilt.

Insbesondere wird ein gemeinsamer beziehungsweise fusionierter Erfassungspunkt 17 aus den Erfassungspunkten 12 und 13 gebildet, wobei dann auch hier vorzugsweise wiederum eine Unschärfezone 18 um diesen fusionierten Erfassungspunkt 17 gebildet wird. Dies ist, wie zu erkennen ist, dann eine deutlich kleinere Unschärfezone 18, so dass die Positionsunschärfe des fusionierten Erfassungspunkts 17 gering ist. Dies bedeutet, dass dessen Lage bereits sehr genau angegeben werden kann.

Es wird somit bei der Zugehörigkeitsbeurteilung insbesondere auch ein Vektor v gebildet, der sich aus der Differenz der Positionsvektoren $\hat{x}_1$ und dem Positionsvektor $\hat{x}_2$ bildet. Insbesondere wird dann eine Kovarianz dieses Differenzvektors v gebildet, die sich dann als Kovarianz S ergibt. Diese ist dadurch definiert, dass sie sich mathematisch aus dem Term $E\{vv^T\}$ bildet. Dies ist dann die Summe der Positionen $P_1$ und $P_2$ der Erfassungspunkte 12 und 13. Es wird dann der Mahalanobis-Abstand d bestimmt, der sich durch $d(\hat{x}_1, \hat{x}_2) = vTS^{-1}v < g$ ergibt. g bezeichnet dabei den Gatewert, der in vorteilhafter Ausführung als 1 gesetzt wird. Liegen dann die Erfassungspunkte innerhalb dieses Gatewertbereichs und auch innerhalb der Gesamt-Unschärfezone, so werden die Erfassungspunkte fusioniert beziehungsweise assoziiert. Daraus ergibt sich dann insbesondere der fusionierte Erfassungspunkt 17.

In Fig. 3 ist in einer vereinfachten Darstellung die Beurteilung von zwei tatsächlichen punktförmigen Erfassungspunkten der Vektoren $\hat{x}_i$ und $\hat{x}_g$ gezeigt. Bei der hier gezeigten Ausführung ist bei einer Gesamtunschärfezone 16 der Erfassungspunkt mit der Position $\hat{x}_g$ genau auf der Begrenzungslinie der Gesamt-Unschärfezone 16 liegend.

Bei einem derartigen Szenario beziehungsweise Ergebnis korrespondiert der Erfassungspunkt mit der Positionsangabe beziehungsweise dem Positionsvektor $\hat{x}_g$ mit einer zugrundegelegten Grundwahrheit über die Zugehörigkeit zum Objekt und darüber hinaus ist der punktuelle Erfassungspunkt mit dem Positionsvektor $\hat{x}_i$ als realer Erfassungspunkt des Objekts zu beurteilen. Die Grundwahrheit bildet sich dabei durch eine Differenzmessung beziehungsweise einen Referenzerfassungspunkt, der dem Objekt tatsächlich zugehörig ist.

Auch hier ist dann wiederum bezüglich dem bereits oben genannten Mahalanobis-Abstand d der Term $vTS^{-1}v$

< g zu setzen, mit dem Differenzvektor v, der sich aus der Differenz zwischen $\hat{x}_i$-$\hat{x}_g$ ergibt. Unter der Vorgabe, dass die räumliche Unschärfe beziehungsweise Positionsunschärfe maximal die Grundwahrscheinlichkeit beziehungsweise die Differenzmessung und somit den Referenzerfassungspunkt sein soll, wird der Gatewert 1 festgelegt.

Dadurch ergibt sich

$$v^T S^{-1} v = g = \frac{\Delta x^2}{\sigma_x^2} + \frac{\Delta y^2}{\sigma_y^2} \, or \, \frac{\Delta d^2}{\sigma_d^2} + \frac{\Delta \alpha^2}{\sigma_\alpha^2}$$

Beispielsweise ist dieser Gatewert für $\Delta y = 0$ erreicht, wenn $\Delta x < \sigma$ ist. Dadurch wird eine besonders einfache Interpretation der Aussage über die räumliche Unsicherheit ermöglicht, und es können sich insbesondere auch die beiden Sensoreinrichtungen, die Ultraschall-Detektionseinrichtung 4 und die Frontkamera 10 und/oder die Heckkamera 11, gegenüber den gleichen Bedingungen im Hinblick auf die Positionsunschärfe der erfassten Erfassungspunkte und somit der Beurteilung der Zugehörigkeit zu einem Objekt prüfen.

Dies bedeutet auch, dass, wenn der Differenzvektor größer wird, die Ungenauigkeit eines Erfassungspunkts größer wird und somit auch die Positionsunschärfe größer werden muss, um eine Assoziation mit der Grundwahrscheinlichkeit und somit der Referenzmessung durchführen zu können. Die Assoziation mit der Grundwahrscheinlichkeit wird dabei als wahres Positivereignis bewertet. Dadurch ist es vorzugsweise vorgesehen, dass eine maximale erlaubte Punktungenauigkeit definiert wird und daher auch die räumliche Unsicherheit mit einem maximalen Wert definiert wird.

S ist eine Matrix, welche die Summe der räumlichen Unschärfen und somit der Positionsunschärfen der zwei Erfassungspunkte angibt. Der Differenzvektor v ist ein Vektor, der die Differenz zwischen den zu beurteilenden Erfassungspunkten angibt. Dabei ist der Wert der Matrix S in Bezug zu dem Gatewert g wichtig.

Wenn eine Sensorfusion durchgeführt wird und somit die Beurteilung von Erfassungspunkten von zwei verschiedenen Sensoreinrichtung erfolgen soll und diesbezüglich auch ein Vergleich erfolgen soll, wird insbesondere der Mahalanobis-Abstand zwischen den zwei Erfassungspunkten von diesen zwei unterschiedlichen Sensoreinrichtungen, wie sie jeweils erfasst wurden, überprüft. Daher ist für eine derartige Überprüfung auch die oben genannte Vorgehensweise vorteilhaft, da sich somit bei Sensoreinrichtungen durch eine gleiche Beurteilungsmöglichkeit abschätzen lassen. Es ist dadurch eine identische Skalierung der erhaltenen Informationen möglich.

In Fig. 4 ist ein weiteres Ausführungsbeispiel gezeigt, bei welchem ebenfalls Erfassungspunkte hier in Form von nicht punktuellen Erfassungspunkten, sondern linienförmigen Erfassungspunkten 19 und 20 vorliegen. Diese sind im Winkel $\alpha$ zueinander orientiert und weisen einen Abstand d auf. Bei dieser Ausgestaltung ergibt sich dann ein Differenzvektor v wie folgt:

$$\hat{v} = \begin{pmatrix} d \\ \Delta \alpha \end{pmatrix}$$

Bei dieser Ausführung ist die räumliche Unsicherheit im zweidimensionalen eine elliptische Unschärfezone, in Form der Gesamt-Unschärfezone 16 um einen definierten Punkt 21, der auf der Linie 19 liegt.

## Patentansprüche

1. Verfahren zum Beurteilen einer Zugehörigkeit eines Erfassungspunkts (12, 13, 19, 20) zu einem Objekt in einem Umgebungsbereich (7, 8) eines Kraftfahrzeugs (1), bei welchem der Erfassungspunkt (12, 13, 19, 20) mit einer ersten Sensoreinrichtung (4) des Kraftfahrzeugs (1) erfasst wird, und in einer Auswerteeinheit eine Positionsunschärfe des Erfassungspunkts (12, 13, 19, 20) charakterisierende Unschärfezone (14, 15) um den Erfassungspunkt (12, 13, 19, 20) gebildet wird, wobei für die Beurteilung der Zugehörigkeit des Erfassungspunkts (12, 13, 19, 20) zu dem Objekt zumindest eine Position eines weiteren Erfassungspunkt (12, 13, 19, 20) des Objekts berücksichtigt wird, wobei eine Gesamt-Unschärfezone (16) abhängig von der Unschärfezone (14, 15) des Erfassungspunkts (12, 13, 19, 20) gebildet wird,

   wobei zur Beurteilung der Zugehörigkeit des Erfassungspunkts (12, 13, 19, 20) zum Objekt eine Kovarianzmatrix (S) abhängig von einem Abstand zwischen den Erfassungspunkten (12, 13, 19, 20) gebildet wird und ein Mahalanobis-Abstand (d) abhängig von der Kovarianzmatrix (S) erzeugt wird,

wobei überprüft wird, ob der Mahalanobis-Abstand (d) kleiner einem vorgegebenen Gatewert (g), insbesondere einem Gatewert von 1 ist, und im Falle, dass der Mahalanobis-Abstand (d) kleiner dem vorgegebenen Gatewert (g) ist, und die beiden Erfassungspunkte (12, 13, 19, 20) innerhalb der Gesamt-Unschärfezone (16) liegen, der Erfassungspunkt (12, 13, 19, 20) dem Objekt als zugehörig beurteilt wird.

**2.** Verfahren nach Anspruch 1,
**dadurch gekennzeichnet, dass**
die Unschärfezone (14, 15) des Erfassungspunkts (12, 13, 19, 20) als eine im zweidimensionalen elliptische Unschärfezone erzeugt wird.

**3.** Verfahren nach Anspruch 1 oder 2,
**dadurch gekennzeichnet, dass**
um den weiteren Erfassungspunkt (12, 13, 19, 20) eine weitere Unschärfezone (14, 15) gebildet wird, und die Gesamt-Unschärfezone (16) auch abhängig von der weiteren Unschärfezone (14, 15) gebildet wird.

**4.** Verfahren nach Anspruch 3,
**dadurch gekennzeichnet, dass**
die weitere Unschärfezone (14, 15) als eine im zweidimensionalen elliptische Unschärfezone erzeugt wird.

**5.** Verfahren nach einem der vorhergehenden Ansprüche,
**dadurch gekennzeichnet, dass**
die Unschärfezone (14, 15) und/oder eine um den weiteren Erfassungspunkt (12, 13, 19, 20) erzeugte weitere Unschärfezone (14, 15) in ihrer Form abhängig von der Lage der Erfassungspunkte (12, 13, 19, 20) zu der Gesamt-Unschärfezone (16) angepasst werden.

**6.** Verfahren nach Anspruch 5,
**dadurch gekennzeichnet, dass**
das Anpassen nach zumindest einer ersten Zugehörigkeitsaussage durchgeführt wird.

**7.** Verfahren nach Anspruch 1,
**dadurch gekennzeichnet, dass**
überprüft wird, ob der Mahalanobis-Abstand (d) kleiner einem vorgegebenen Gatewert (g), insbesondere einem Gatewert von 1, ist, und im Falle, dass der Mahalanobis-Abstand (d) kleiner dem vorgegebenen Gatewert (g) ist, wird die Kovarianzmatrix (S) verkleinert.

**8.** Verfahren nach Anspruch 5 oder 6 und einem der Ansprüche 1 oder 7,
**dadurch gekennzeichnet, dass**
zumindest eine Unschärfezone (14, 15) in der Form und/oder Orientierung angepasst wird, wenn der Mahalanobis-Abstand (d) einer Zugehörigkeitsbeurteilung größer dem Gatewert (g) ist.

**9.** Verfahren nach Anspruch 8,
**dadurch gekennzeichnet, dass**
zumindest eine Umschärfezone (14, 15) angepasst wird, wenn bei einem Beurteilungsszenario eine Anzahl N von Zugehörigkeitsbeurteilungen von Erfassungspunkten (12, 13, 19, 20) zu einem Objekt größer einem Schwellwert ist, welche Anzahl N jeweils mit einem Mahalanobis-Abstand (d) größer dem Gatewert (g) beurteilt wurde.

**10.** Verfahren nach einem der vorhergehenden Ansprüche,
**dadurch gekennzeichnet, dass**
der Erfassungspunkt (12, 13, 19, 20) und der weitere Erfassungspunkt (12, 13, 19, 20) zu einem fusionierten Erfassungspunkt (17) assoziiert werden, wenn die beiden Erfassungspunkte (12, 13, 19, 20) in dem Bereich der Gesamt-Unschärfezone (16) liegen.

**11.** Verfahren nach einem der vorhergehenden Ansprüche,
**dadurch gekennzeichnet, dass**
der Umgebungsbereich (7, 8) mit einer zur ersten Sensoreinrichtung (4) funktionell unterschiedlichen zweiten Sensoreinrichtung (10, 11) erfasst wird, und Erfassungspunkte der zweiten Sensoreinrichtung (10, 11) auf Basis der zur ersten Sensoreinrichtung (4) zu Grunde gelegten Zugehörigkeitsbeurteilung beurteilt werden.

**12.** Verfahren nach Anspruch 1 und Anspruch 11,
**dadurch gekennzeichnet, dass**
die Zugehörigkeitsbeurteilungen der beiden Sensoreinrichtungen (4, 10, 11) verglichen werden und eine Aussagegenauigkeit zumindest einer Sensoreinrichtung (4, 10, 11) abhängig davon bewertet wird.

**13.** Verfahren nach einem der vorhergehenden Ansprüche,
**dadurch gekennzeichnet, dass**
das durch zugehörige Erfassungspunkte (12, 13, 19, 20) charakterisierte Objekt in eine Umgebungsbereichskarte eingetragen wird.

**14.** Fahrerassistenzsystem (2) mit zumindest einer ersten Sensoreinrichtung (4) und einer Auswerteeinheit, welche zum Ausführen eines Verfahrens nach einem der vorhergehenden Ansprüche ausgebildet ist.

**Claims**

**1.** Method for assessing an affiliation of a sensing point (12, 13, 19, 20) to an object in a surrounding area (7, 8) of a motor vehicle (1), in which the sensing point (12, 13, 19, 20) is sensed using a first sensor device (4) of the motor vehicle (1), and a fuzziness zone (14, 15) characterizing positional fuzziness of the sensing point (12, 13, 19, 20) is formed around the sensing point (12, 13, 19, 20) in an evaluation unit, wherein the assessment of the affiliation of the sensing point (12, 13, 19, 20) to the object takes into consideration at least one position of a further sensing point (12, 13, 19, 20) of the object, wherein an overall fuzziness zone (16) is formed on the basis of the fuzziness zone (14, 15) of the sensing point (12, 13, 19, 20), wherein the affiliation of the sensing point (12, 13, 19, 20) to the object is assessed by virtue of a covariance matrix (S) being formed on the basis of a distance between the sensing points (12, 13, 19, 20) and a Mahalanobis distance (d) being produced on the basis of the covariance matrix (S), wherein a check is performed to determine whether the Mahalanobis distance (d) is less than a prescribed gate value (g), particularly a gate value of 1, and, in the event of the Mahalanobis distance (d) being less than the prescribed gate value (g), and the two sensing points (12, 13, 19, 20) being situated within the overall fuzziness zone (16), the sensing point (12, 13, 19, 20) is assessed as being affiliated to the object.

**2.** Method according to Claim 1,
**characterized in that**
the fuzziness zone (14, 15) of the sensing point (12, 13, 19, 20) is produced as a two-dimensionally elliptical fuzziness zone.

**3.** Method according to Claim 1 or 2,
**characterized in that**
a further fuzziness zone (14, 15) is formed around the further sensing point (12, 13, 19, 20), and the overall fuzziness zone (16) is also formed on the basis of the further fuzziness zone (14, 15).

**4.** Method according to Claim 3,
**characterized in that**
the further fuzziness zone (14, 15) is produced as a two-dimensionally elliptical fuzziness zone.

**5.** Method according to one of the preceding claims,
**characterized in that**
the fuzziness zone (14, 15) and/or a further fuzziness zone (14, 15) produced around the further sensing point (12, 13, 19, 20) have their shape adapted on the basis of the location of the sensing points (12, 13, 19, 20) in relation to the overall fuzziness zone (16).

**6.** Method according to Claim 5,
**characterized in that**
the adaptation is performed according to at least one first affiliation statement.

**7.** Method according to Claim 1,
**characterized in that**
a check is performed to determine whether the Mahalanobis distance (d) is less than a prescribed gate value (g), particularly a gate value of 1, and, in the event of the Mahalanobis distance (d) being less than the prescribed gate value (g), the covariance matrix (S) is reduced.

8.  Method according to Claim 5 or 6 and either of Claims 1 and 7,
    **characterized in that**
    at least one fuzziness zone (14, 15) has its shape and/or orientation adapted if the Mahalanobis distance (d) of an affiliation assessment is greater than the gate value (g).

9.  Method according to Claim 8,
    **characterized in that**
    at least one fuzziness zone (14, 15) is adapted if, in one assessment scenario, a number N of affiliation assessments for sensing points (12, 13, 19, 20) with respect to an object is greater than a threshold value, which number N has respectively been assessed with a Mahalanobis distance (d) greater than the gate value (g).

10. Method according to one of the preceding claims, **characterized in that**
    the sensing point (12, 13, 19, 20) and the further sensing point (12, 13, 19, 20) are associated to form a fused sensing point (17) if the two sensing points (12, 13, 19, 20) are situated in the area of the overall fuzziness zone (16).

11. Method according to one of the preceding claims, **characterized in that**
    the surrounding area (7, 8) is sensed using a second sensor device (10, 11) that is functionally different from the first sensor device (4), and sensing points of the second sensor device (10, 11) are assessed on the basis of the affiliation assessment taken as a basis for the first sensor device (4).

12. Method according to Claim 1 and Claim 11, **characterized in that**
    the affiliation assessments of the two sensor devices (4, 10, 11) are compared and a statement accuracy of at least one sensor device (4, 10, 11) is rated on the basis thereof.

13. Method according to one of the preceding claims, **characterized in that**
    the object **characterized by** affiliated sensing points (12, 13, 19, 20) is entered into a map of the surrounding area.

14. Driver assistance system (2) having at least one first sensor device (4) and an evaluation unit that is configured to carry out a method according to one of the preceding claims.


**Revendications**

1.  Procédé d'appréciation d'une appartenance d'un point de détection (12, 13, 19, 20) à un objet dans une zone environnante (7, 8) d'un véhicule automobile (1), dans lequel le point de détection (12, 13, 19, 20) est détecté par un premier dispositif capteur (4) du véhicule automobile (1), et une zone d'imprécision (14, 15), caractérisant l'imprécision de position du point de détection (12, 13, 19, 20), est formée autour du point de détection (12, 13, 19, 20) dans une unité d'évaluation, dans lequel, pour l'appréciation de l'appartenance du point de détection (12, 13, 19, 20) à l'objet, il est tenu compte d'au moins une position d'un autre point de détection (12, 13, 19, 20) de l'objet, dans lequel une zone d'imprécision globale (16) est formée en fonction de la zone d'imprécision (14, 15) du point de détection (12, 13, 19, 20),

    dans lequel, pour l'appréciation de l'appartenance du point de détection (12, 13, 19, 20) à l'objet, une matrice de covariance (S) est formée en fonction d'une distance entre les points de détection (12, 13, 19, 20) et une distance de Mahalanobis (d) est générée en fonction de la matrice de covariance (S),
    dans lequel il est vérifié si la distance de Mahalanobis (d) est inférieure à une valeur de porte prédéterminée (g), en particulier une valeur de porte de 1, et dans le cas où la distance de Mahalanobis (d) est inférieure à la valeur de porte prédéterminée (g) et où les deux points de détection (12, 13, 19, 20) sont situés dans la zone d'imprécision globale (16), le point de détection (12, 13, 19, 20) est considéré comme appartenant à l'objet.

2.  Procédé selon la revendication 1,
    **caractérisé en ce que** la zone d'imprécision (14, 15) du point de détection (12, 13, 19, 20) est générée sous la forme d'une zone d'imprécision elliptique à deux dimensions.

3.  Procédé selon la revendication 1 ou 2,
    **caractérisé en ce qu'**une autre zone d'imprécision (14, 15) est formée autour de l'autre point de détection (12, 13, 19, 20), et **en ce que** la zone d'imprécision globale (16) est également formée en fonction de l'autre zone d'imprécision (14, 15).

4. Procédé selon la revendication 3,
**caractérisé en ce que** l'autre zone d'imprécision (14, 15) est générée sous la forme d'une zone d'imprécision elliptique à deux dimensions.

5. Procédé selon l'une quelconque des revendications précédentes,
**caractérisé en ce que** la zone d'imprécision (14, 15) et/ou une autre zone d'imprécision (14, 15) générée autour de l'autre point de détection (12, 13, 19, 20) sont soumises à une adaptation de leur forme en fonction de la position des points de détection (12, 13, 19, 20) par rapport à la zone d'imprécision globale (16).

6. Procédé selon la revendication 5,
**caractérisé en ce que** l'adaptation est effectuée selon au moins une première déclaration d'appartenance.

7. Procédé selon la revendication 1,
**caractérisé en ce qu'**il est vérifié si la distance de Mahalanobis (d) est inférieure à une valeur de porte prédéterminée (g), en particulier une valeur de porte de 1, et dans le cas où la distance de Mahalanobis (d) est inférieure à la valeur de porte prédéterminée (g), la matrice de covariance (S) est réduite.

8. Procédé selon la revendication 5 ou 6 et l'une des revendications 1 ou 7,
**caractérisé en ce qu'**au moins une zone d'imprécision (14, 15) est soumise à une adaptation de forme et/ou d'orientation lorsque la distance de Mahalanobis (d) d'une appréciation d'appartenance est supérieure à la valeur de porte (g).

9. Procédé selon la revendication 8,
**caractérisé en ce qu'**au moins une zone d'imprécision (14, 15) est adaptée lorsque, dans un scénario d'appréciation, un nombre N d'appréciations d'appartenance des points de détection (12, 13, 19, 20) à un objet est supérieur à une valeur de seuil, lequel nombre N a été respectivement apprécié avec une distance de Mahalanobis (d) supérieure à la valeur de porte (g).

10. Procédé selon l'une quelconque des revendications précédentes,
**caractérisé en ce que** le point de détection (12, 13, 19, 20) et l'autre point de détection (12, 13, 19, 20) sont associés à un point de détection fusionné (17) lorsque les deux points de détection (12, 13, 19, 20) sont situés dans la région de la zone d'imprécision globale (16).

11. Procédé selon l'une quelconque des revendications précédentes,
**caractérisé en ce que** la zone environnante (7, 8) est détectée par un second dispositif capteur (10, 11) fonctionnellement différent du premier dispositif capteur (4), et **en ce que** des points de détection du second dispositif capteur (10, 11) sont appréciés sur la base de l'appréciation d'appartenance réalisée par rapport au premier dispositif capteur (4).

12. Procédé selon la revendication 1 et la revendication 11,
**caractérisé en ce que** les appréciations d'appartenance des deux dispositifs capteurs (4, 10, 11) sont comparées et **en ce qu'**une précision de déclaration d'au moins un dispositif capteur (4, 10, 11) est évaluée en fonction de cette comparaison.

13. Procédé selon l'une quelconque des revendications précédentes,
**caractérisé en ce que** l'objet **caractérisé par** des points de détection associés (12, 13, 19, 20) est inscrit dans une carte de zone environnante.

14. Système d'assistance à la conduite (2) comprenant au moins un premier dispositif capteur (4) et une unité d'évaluation qui est conçue pour mettre en œuvre un procédé selon l'une quelconque des revendications précédentes.

**Fig.1**

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006049626 A1
- DE 102009045286 A1
- US 2004208341 A